# EUROPEAN PATENT SPECIFICATION

(11) **EP 1 866 406 B1**
(45) Date of publication and mention of the grant of the patent: **17.12.2014**
(21) Application number: 06717843.4
(22) Date of filing: 09.01.2006
(51) Int. Cl.: C12H 1/056, C12H 1/22, C12G 3/12

(54) **METHOD AND APPARATUS FOR THE PRODUCTION OF DISTILLED SPIRITS**
VERFAHREN UND VORRICHTUNG ZUR HERSTELLUNG DESTILLIERTER ALKOHOLE
PROCEDE ET DISPOSITIF POUR PRODUIRE DES SPIRITUEUX DISTILLES

(30) Priority: 25.03.2005 US 665307 P; 01.09.2005 US 218350
(43) Date of publication of application: 19.12.2007
(73) Proprietor: TransBorder Marketing, Inc., Springfield MA 01108 (US)
(72) Inventor: ZUKOWSKI, Józef Tadeusz, Mazowiecki District (PL); PAWLOWSKI, Józef, 05-850 Ozarow Mazowiecki (PL); SMOLANA, Michal, 02-943 Waszawa (PL)
(74) Representative: Surmiak, Jan
(86) International application number: PCT/US2006/000690
(87) International publication number: WO 2006/104532

(56) References cited:
- EP-A2- 0 768 373
- US-A- 4 784 868
- US-A- 4 791 063
- US-A- 4 956 194
- US-A1- 2002 194 999
- Anonymous: "16 Premium Vodkas", Russianlife: Vodka , May 2000 (2000-05), pages 1-2, XP002629611, Retrieved from the Internet: URL:http://www.russianlife.com/vodka/16200 0.cfm [retrieved on 2011-03-23]
- Lucy Bannell: "Bar of the week: Revolution", Telegraph , 28 November 2001 (2001-11-28), XP002629612, Retrieved from the Internet: URL:http://www.telegraph.co.uk/foodanddrin k/4814047/Bar-of-the-week-Revolution.html [retrieved on 2011-03-23]
- Transparently trendy (MACKAY) Los Angeles Times. 22 Dec 2004 F.1 XP008121518

## Description

### BACKGROUND OF THE INVENTION

### Related Application Data

This application claims priority from and is related to commonly owned U.S. Provisional Patent Application Serial No. 60/665,307 filed on March 25, 2005 and entitled "Method for the Filtration of Aged Distilled Spirits" and U.S. Patent Application Serial No. 11/218,350 filed September 1, 2005 and entitled "Method and Apparatus for the Production of Distilled Spirits."

### Field of the Invention

This invention relates to a method for the filtration, distillation and/or aging of alcohol to improve the taste, texture and or color of the resulting beverage. More particularly, the present invention relates to a method of filtering an aged distilled sprit to produce a clear alcoholic beverage, and likewise relates to the use of a diamond filter medium to improve taste and texture.

### Description of the Background Art

The background art contains various methods for the processing and production of distilled spirits. For instance, U.S. Patent 4,792,459 to Krause illustrates a process and apparatus for producing vodka. The process of Krause produces vodka by distilling one aqueous solution of alcohol having a relatively low alcohol content from a poststill. The volume of the solution in the still is maintained by a flow of another aqueous solution of alcohol of relatively high alcohol content. The vapor is condensed to produce vodka.

Another example is disclosed in U.S. Patent 5,370,891 to Fillipova, which illustrates treating a mixture of ethyl alcohol and water for the reduction of impurities. The method includes the step of flowing the mixture through three layers of an activated charcoal adsorber having various surface activities.

U.S. Patent 6,846,503 to Vickers discloses a method for flavoring an ethanolic spirit, such as vodka. The method includes an aging step which is facilitated by one or more aging enhancers. In another step, a precipitate is allowed to form whereby some of the aging enhancers are removed. After the aging step is concluded, the spirit is filtered to remove solids introduced during the aging process.

Another example of an aging process for spirits is illustrated in U.S. Patent 6,506,430 to Zimlich. Zimlich discloses the use of activated carbon to remove excess color from an accelerated oak aged alcoholic product. The invention envisions using the oak aged product to improve the taste of less expensive alcoholic products.

EP 0 768 373 to Dixon and Pollock discloses a method of producing a potable spirit by taking a matured spirit, fractionating it into a plurality of fractions, then recombining and/or blending portions of these fractions in different proportions to produce a potable spirit having a different composition from that of the matured spirit. The method does not disclose any diamond filtration.

U.S. Patent 4,956,194 to Gos discloses an improved method for accelerating the aging of distillates. The method includes an addition to the distillate a tree bark and optionally an apple concentrate and seasoning the distillate in wooden barrels for a predetermined period of time, preferably for 12 years.

U.S. Patent 4,784,868 to Young discloses a method for producing a potable spirit, such as vodka. The method includes removing by an extraction process water from a fermented wash containing ethanol, water and congeners to produce a substantially water-free mixture of ethanol and congeners, and then fractionally distilling this mixture to produce a potable alcohol. This method provides an energy efficient separation of the ethanol and congeners.

Admittedly, some publications accessible in the internet websites have mentioned about a diamond filtration of vodka, for instance publication "Bar of the week: Revolution" by Lucy Bannel, www.telegraph.co.uk/foodanddrink, November 28, 2001, or "16 Premium Vodkas", by www.rusianlife.com/vodka/162000.cfm, or information "Transparently trendy" by McKey in Los Angeles Times, Dec. 22, 2004. These publications, however, had only mentioned about the diamond filtration of vodka and disclosed neither details of the technical features related to the apparatus nor any technological methods of the process as claimed in the present invention.

Further still, Russian Patent 2,148,631 to Burachevskii discloses a method of treating an aqueous-alcoholic liquid mixture such that a vodka of 40% strength can be obtained. The method discloses the aging, filtering and bottling of the vodka prepared in accordance with the method.

Although each of the above referenced inventions achieves its individual objective, they all suffer from common problems. For instance, none of the identified methods provide a filtration process for effectively removing impurities from an aged spirit whereby an alcoholic beverage with both an improved taste and appearance is obtained. Additionally, none of the references disclose a method of diamond filtration to improve the taste and texture of the resulting beverage.

### SUMMARY OF THE INVENTION

It is therefore one of the objectives of this invention to provide improved methods of filtering a distilled spirit.

It is also an object of this invention to filter aged distilled spirits to produce clear alcoholic beverages.

Still another object of this invention is a diamond filtration apparatus for filtration distilled spirits to improve their texture.

The present invention is carried out by first distilling an alcohol to yield an alcohol distillate, then aging the distillate in stages using first and second oak or oak lined barrels. A subsequent distillation step is used to remove any coloring added during the aging step. The distillate is finally delivered into a diamond filtering apparatus wherein diamonds are brought into contact with the distillate to improve taste and texture.

The foregoing has outlined rather broadly the more pertinent and important features of the present invention in order that the detailed description of the invention that follows may be better understood so that the present contribution to the art can be more fully appreciated. Additional features of the invention will be described hereinafter which form the subject of the claims of the invention. It should be appreciated by those skilled in the art that the conception and the specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

### BRIEF DESCRIPTION OF THE DRAWINGS

For a fuller understanding of the nature and objects of the invention, reference should be had to the following detailed description taken in connection with the accompanying drawings in which:
Fig. 1 is a diagram illustrating the initial steps of the method of the present invention.
Fig. 2 is a diagram illustrating the subsequent steps of the method of the present invention.
Fig. 3 is a schematic representation of the fractional distillation apparatus of the present invention.
Fig. 4 is a cross-sectional view of the filtration apparatus of the present invention.

### DETAILED DESCRIPTION OF THE INVENTION

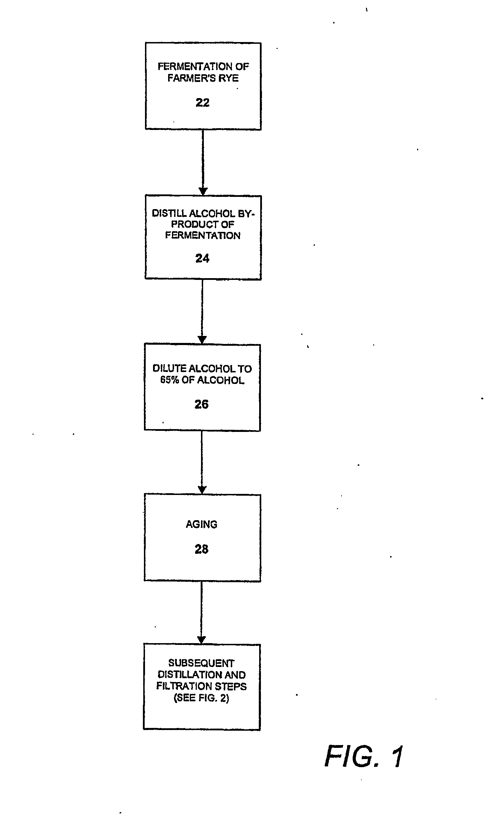

The present invention relates to a method and apparatus for the production of a filtered and distilled spirit. The invention is used in the production of an aged, clear vodka, although other spirits, such as whiskey, can also be produced in accordance with the present invention. The distilled spirit is filtered with diamonds to improve texture and taste. The details of the present invention are discussed below in conjunction with Figures 1-4.

### Initial Fermenting and Aging Steps

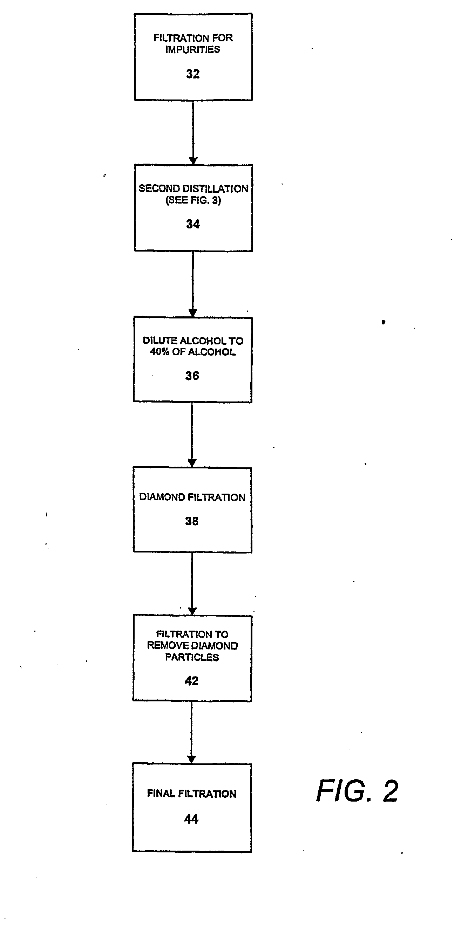

The initial steps of the method include fermentation, distillation, dilution and aging. During fermentation, a volume of starting material is allowed to ferment to yield alcohol. During the distillation step, the purity of the alcohol is increased in a still. The resulting distillate is then diluted with water to achieve an alcohol content suitable for aging. Aging is carried out over a period of several years in oak lined casks. Each of these initial steps is described in greater detail hereinafter in conjunction with the flow chart of Figure 1. Subsequent method steps are described later in conjunction with Figure 2.

As noted in step 22, the process begins with a fermentable starting material, which can be a grain. The type of starting material used will depend upon the alcoholic beverage being produced. By way of non-limiting example, the starting material can be a combination of a grain (such as corn, cornmeal, rye or potatoes), and sugar, yeast and/or water. In the preferred embodiment, a starting material consisting of a seasoned farmer's rye of Polish origin is used in the production of vodka. Nonetheless, the present invention can also be used with other starting materials to yield whiskey, rums, cognacs, or bourbons.

Enzymes are then added to the starting material to separate out sugars and convert the starting material into a mash. The mash is subsequently fermented to produce alcohol. Fermentation is a yeast driven reaction whereby the yeast present in the mash breaks down sugars and/or grains to produce alcohol. Thus, the initial fermenting step 22 yields an alcohol that is subsequently processed to yield a final drinkable product, while the remainder of the mash is discarded.

In step 24, alcohol from the mash is distilled to increase the concentration of the alcohol and to remove any impurities left over from the mash. Any of a number of known distillation methods familiar to those skilled in the art can be employed. These distillation processes typically involve heating the alcohol to evaporate the more volatile components and thereby leave behind the less volatile impurities. The vaporized alcohol, or distillate, is then condensed back into a liquid form and collected for further processing. In the present invention, this distillation process is achieved by way of a conventional still (not shown), with the construction and operation of the still being readily apparent to those skilled in the art.

The resulting distillate will have an increased alcohol concentration that is not suitable for either consumption or subsequent aging steps. Namely, the distillate will have an alcohol concentration of approximately 90% by volume, whereas the present inventors have discovered that an alcohol concentration of approximately 65% by volume is best for aging. Accordingly, during step 26 the distillate is diluted with water to produce an alcohol content of approximately 65% by volume. The diluting is preferably carried out with demineralized water because demineralized water does not have any calcium or other minerals that react unfavorably with alcohol. Although alcohol contents other than 65% can be employed with the present method, the inventors have discovered that this is the preferred percentage.

Following the diluting step, in step 28 the distillate is aged in barrels or casks over a period of several years. The barrels used in this step are constructed from oak or have an oak lining. The interior surfaces of the barrels are also cleaned with hard water and steel to smooth the interior surfaces and remove approximately 2 millimeters. The flavor imparted to the distillate by the barrels can also be improved by using barrels that have been previously used to store white wine. These used barrels give the distillate a pleasing wine flavoring. Barrels that were previously used to store other types of beverages can also be used to impart other desirable flavors.

The aging is carried out in stages using two or more barrels. Staging takes advantage of the fact that smaller barrels impart flavor to the distillate more rapidly whereas larger barrels impart flavor at a slower rate. Moreover, although smaller barrels are preferred for the ability to quickly transfer flavor, larger barrels are preferred for space saving reasons. A combination of smaller and larger barrels is thus used to optimize both flavoring and storage. For example, for a ten year aging process, a larger barrel size of between 10,000 to 30,000 liters is used for a six year aging period and, thereafter, the distillate is transferred to a number of smaller 500 liters barrels for a four year period. In a thirty year aging process, the larger barrel size is used for twenty-five years and the smaller barrel size is used for five years. For a fifty year aging process, the larger barrel size is used for forty years and the smaller barrel size is used for ten years. Those with skill in the distilling and aging arts will appreciate that suitable aging can be achieved over other time periods and with barrels with varying sizes. Likewise, staging can be accomplished with multiple barrels instead of the two barrel process described herein.

Whatever combination of barrels is used, it is important that the oak lining be exposed to the distillate to impart flavor and taste. As part of this aging, thousands of small organic particles are released from the oak into distillate to give the distillate flavor. This results in the distillate taking on a dark, hazy, or cloudy appearance. This coloring is undesirable and can be subsequently removed from the distillate via filtration and/or distillation to produce a clear, aged, distilled alcoholic spirit as desired.

### Subsequent Distilling and Filtering Steps

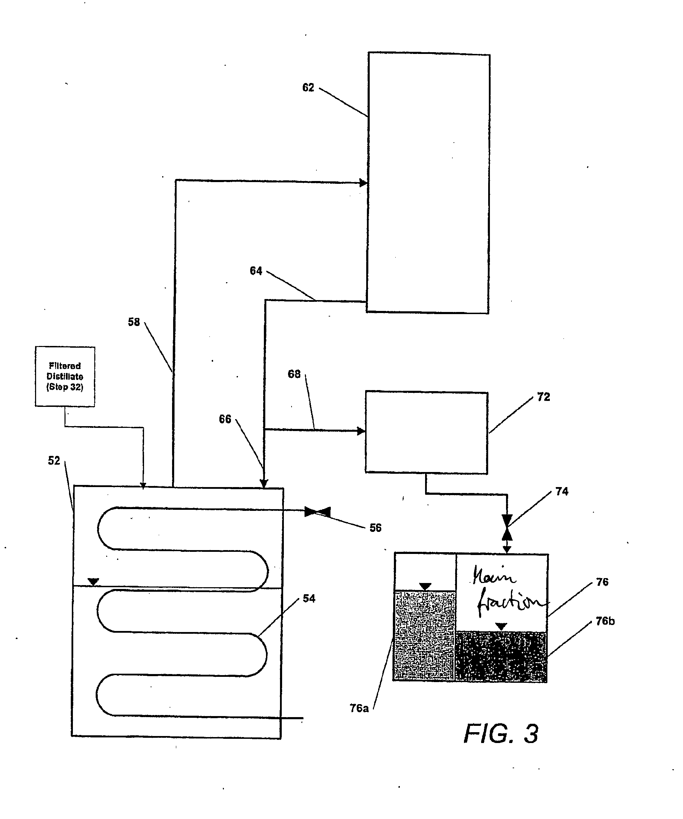

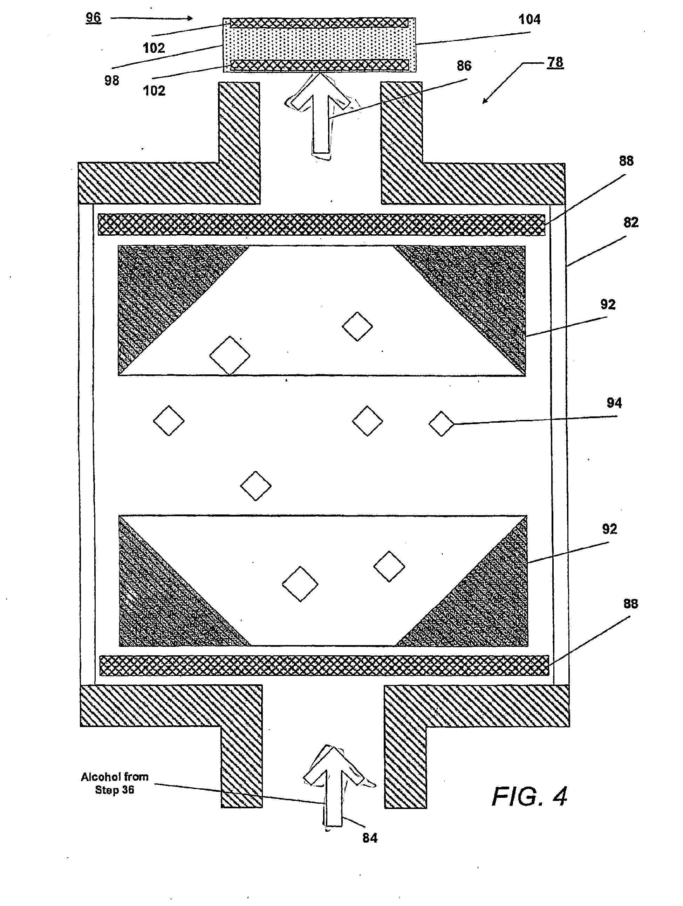

The subsequent distillation and filtration steps are illustrated in Figure 2. These steps are carried out in the distillation apparatus illustrated in Figure 3 and the filtration apparatus illustrated in Fig. 4. These additional steps yield an alcoholic beverage ready for consumption and/or bottling.

Filtration step 32 is carried out by a polypropylene filter (not shown) with a mesh diameter of between .2 and 5 microns. The purpose of this filtration is to separate from the distillate the particles and/or impurities added from the aging process. Namely, the polypropylene filter is employed in filtering out the small organic particles that have been absorbed from the oak cask. The filtration is preferably fine enough to remove the cloudy or hazy appearance. The specific mesh diameter employed will depend, in part, on what impurities are being filtered and what type of aging casks were used.

As noted at step 34, after the initial filtration, a subsequent distillation step is carried out. However, unlike the distillation of step 24, this subsequent distillation is a fractional distillation carried out with the apparatus schematically illustrated in Figure 3. The subsequent distillation yields a clear alcohol. Figure 3 illustrates an evaporator 52 into which the filtered distillate from step 32 is delivered. Once in evaporator 52, the distillate is heated via a steam conduit 54 and nozzle 56. Conduit 54 raises the temperature of the distillate to convert it into a vapor phase. The vapor fraction is then delivered to a partial condenser 62 byway of conduit 58. Fractional distillation is achieved within condenser 62 by allowing the most volatile fraction, the tails fraction, to condense first for delivery back into evaporator 52 via conduits 64 and 66. The remaining distillate, consisting of the head and main fractions, is delivered (via conduit 68) to cooler 72.

Once in cooler 72, the head fraction is condensed first due to its lower boiling point. Once condensed in liquid form the head fraction is delivered into compartment 76a of distillation receiver 76 via conduit 74. The main fraction is condensed only after the head fraction is condensed due to the higher boiling point of the main fraction. Once condensed, the main fraction is delivered via conduit 74 into compartment 76b of distillation receiver 76.

Thus, by way of the fractional distillation, the distillate can be separated into three fractions, with only the intermediate or main fraction being used in the final product. Namely, the tails fraction (condensed within partial condenser 62) constitutes roughly 50% of the distillate and is waste. The head fraction (which is the first to be condensed within cooler 76) constitutes 10% of the distillate. The main fraction (which condenses within cooler 76 after the head fraction) constitutes 40% of the distillate. Only the main fraction is processed further as noted in the subsequent steps.

Following the fractional distillation step 34, at step 36 the distillate is diluted to achieve an alcohol content of 40% by volume. As with dilution step 26, step 36 is carried out by adding demineralized water to the distillate, with demineralized water being preferred due to its lack of reactiveness with alcohol. Although a range of alcohol concentrations can be used in the invention, the inventors have determined that an alcohol content of 40% by-volume is preferred for the taste and drinkability of the final product.

After the distillate has been sufficiently diluted, a main filtration step is carried out. The main filtration is achieved in two steps: an initial diamond filtration 38 and a final diamond filtration 42, both of which are carried out in the Filtration apparatus 96 depicted in Figure 4. Filtration apparatus 78 includes a glass container 82 with an inlet 84 and outlet 86 and intermediate filter media therebetween. In the embodiment, a plurality of loose diamonds 94 comprise the intermediate filter medium. These are preferably whole diamonds of a carat or less and 3 millimeters or less in diameter. In use, these diamonds are kept in suspension within container 82 are used as the initial filtration. Filtration apparatus 78 also includes a pair of wire or mesh screens 88 that are secured adjacent to the inlet and the outlet openings (84 and 86) to prevent the escape of the lose diamonds and to further filter the distillate. With continuing reference to Figure 4, apparatus 78 further includes nozzles 92 situated at the inlet and the outlet (84 and 86) of housing 82. These nozzles are used in retaining the loose diamonds 94 and in preventing them from gathering in the corners of the apparatus 78.

In use, the alcohol from fractional distillation apparatus (Fig. 3) is delivered into inlet 84 of container 82. The flow of alcohol causes the loose diamonds 94 to become suspended within container 82. The operator of the apparatus can view this process by way of the glass walls of container. The present inventors have discovered that diamonds are an excellent filter and that filtering the distillate with diamonds improves the taste, texture and smoothness of resulting spirit.

In the final diamond filtration stage, diamonds are again used as a filter medium. The final diamond filtration apparatus 96 is illustrated in figure 4 and includes a pair of mesh screens 102 that are contained within a housing 98. Any type of mesh screen can be used, although screens with a mesh size of 5 microns or less are preferred. The screens 102 and housing 98 are used to retain a volume of diamond dust or chips 104 through which the distillate passed. The diamonds used in this step are not whole diamonds like those used within container 82, instead diamonds 104 are chips or pieces of diamonds that constitute a dust or powder. The diamonds used in this stage are 5 microns or less in diameter. Final diamond filtration apparatus 96 is primarily used to remove any impurities or diamond particles that may have been added to the distillate within filtration apparatus 78.

As an alternative to the final diamond filtration apparatus 96, a standard cellulose filter can be used with approximately a 1 micron mesh diameter. Again, the object is to remove any diamond particles that may be placed into the distillate by way of the diamond filtration process.

Yet another filtration step 44 can be employed after the final diamond filtration step. Specifically, the alcohol can be filtered through a another standard filter to remove any other contaminates that might be present after the final diamond filtration. This filter is preferably a polypropylene filter with a 1 micron mesh diameter. This final filtration yields a spirit suitable for consumption and/or bottling.

The present disclosure includes that contained in the appended claims, as well as that of the foregoing description. Although this invention has been described in its preferred form with a certain degree of particularity, it is understood that the present disclosure of the preferred form has been made only by way of example and that numerous changes in the details of construction and the combination and arrangement of parts may be resorted to without departing from the spirit and scope of the invention.

Now that the invention has been described,

## Claims

1. A method of producing an aged filtered distilled spirit comprising the following steps:
fermenting a volume of farmer's rye, whereby alcohol is produced as a by-product;
distilling the alcohol to remove impurities, increase concentration and produce an alcohol distillate;
diluting the alcohol distillate with demineralized water to produce a distillate with an alcohol content of approximately 65% by volume;
providing first and second oak or oak lined barrels, with the first barrel being substantially larger than the second;
aging the alcohol distillate in the first barrel for a first time period;
transferring the alcohol distillate from the first barrel to the second barrel and aging the alcohol distillate for a second time period, wherein the first time period is longer than the second time period;
filtering the aged alcohol distillate through a polypropylene column filter with a mesh diameter of between 5 microns and .2 microns to remove any impurities resulting from the aging;
fractionally distilling the aged alcohol distillate whereby an intermediate fraction is separated from initial and final fractions and retained for further processing;
diluting the retained alcohol distillate with demineralized water to produce an alcohol content of 40% by volume;
providing a filtration apparatus that includes a glass container housing with a plurality of loose diamonds, wherein said container includes nozzles to retain the diamonds and the diamonds are used as a filter medium;
delivering the retained alcohol distillate into the glass container of said apparatus whereby the diamonds are placed in suspension and the retained alcohol distillate is filtered by the diamonds to improve taste and texture;
filtering the retained alcohol distillate to remove any impurities resulting from the diamond filtration.

2. The method according to claim 1, wherein an aging of alcohol distillate lasts for at least two years.

3. The method according to claim 1 or 2, wherein the aging is carried out in oak lined barrels.

4. A filtration apparatus for filtration alcohol distillates, wherein the apparatus includes a glass container 82 with an inlet 84 and outlet 86 and an intermediate filter medium therebetween that comprises a plurality of loose diamonds 94, preferably whole diamonds of a carat or less and 3 millimeters or less in diameter, and the apparatus further includes a pair of wire or mesh screens 88 that are secured adjacent to the inlet and the outlet openings 84 and 86 to prevent the escape of the lose diamonds from the container 82 and to further filter the distillate, the apparatus further includes nozzles 92 situated at the inlet 84and the outlet 86 of housing 82, these nozzles are used in retaining the loose diamonds 94 and in preventing them from gathering in the corners of the apparatus, and the apparatus further includes a final diamond filtration apparatus 96 which includes a housing 98 with a volume of diamond dust or chips 104 inside and a pair of mesh screens 102 with a mesh size of 5 microns or less, said final filtration apparatus is used to remove any impurities or diamond particles that may have been added to the distillate within filtration apparatus.

5. The filtration apparatus according to claim 4, wherein the diamonds 94 are kept in suspension within container 82 when said apparatus is in use.

## Patentansprüche

1. Verfahren zur Herstellung eines gealterten destillierten Spiritus, bestehend aus den folgenden Schritten:
Fermentation einer Menge von Roggen, wobei Alkohol als Nebenprodukt erzeugt wird;
Destillation des Alkohols zur Entfernung von Verunreinigungen, Erhöhung der Konzentration und Herstellung eines Alkoholdestillats;
Verdünnen des Alkohol-Destillats mit demineralisiertem Wasser, um ein Destillat mit einem Alkoholgehalt von ca. 65 Vol.-% herzustellen.
Bereitstellung von Eichenfässern oder mit Eichenholz ausgekleideten Fässern für die erste und zweite Alterung, wobei das Fass für die erste Alterung wesentlich größer sein muss als für die zweite;
Alterung des Alkoholdestillats in dem Fass für die erste Alterung für den ersten Alterungszeitraum;
Umfüllen des Alkoholdestillats aus dem ersten Fass in das zweite Fass und Alterung des Alkoholdestillats für einen zweiten Alterungszeitraum, wobei der erste Alterungszeitraum länger ist als der zweite Alterungszeitraum;
Filtration von gealtertem Alkoholdestillat in einer Polypropylen Filtersäule mit einer Maschenweite zwischen 5 und ,2 Mikrometer zur Entfernung der aus der Alterung stammenden Verunreinigungen;
Fraktionierte Destillation des gelagerten Alkoholdestillats, wobei eine mittlere Fraktion von den ersten und letzten Fraktionen getrennt und für die weitere Verarbeitung zurückbehalten wird;
Verdünnen des zurückbehaltenen Alkohol-Destillats mit demineralisiertem Wasser, um einem Alkoholgehalt von 40 Vol.-% zu erzielen;
Bereitstellung eines Filterapparats, der aus einem Glasbehälter mit einer Vielzahl loser Diamanten besteht, wobei der genannte Behälter über Düsen verfügt, um die Diamanten zurückzuhalten und die Diamanten als Filtermedium verwendet werden;
Einleiten des zurückgehaltenen Alkoholdestillats in den Glasbehälter des erwähnten Apparats, wobei die Diamanten in Schwebe gehalten werden und das zurückgehaltene Alkoholdestillat von den Diamanten gefiltert wird, um den Geschmack und die Konsistenz zu verbessern;
Filtern des zurückbehaltenen Alkoholdestillats, um Verunreinigungen aus der Diamantfiltration zu entfernen.

2. Verfahren gemäß Anspruch 1, wobei die Alterung des Alkoholdestillats wenigstens zwei Jahre dauert.

3. Verfahren gemäß Anspruch 1 oder 2, wobei die Alterung in mit Eichenholz ausgekleideten Fässern vorgenommen wird.

4. Ein Filterapparat zur Filtration von Alkoholdestillaten, wobei der Apparat aus einem Glasbehälter 82 mit einem Einlauf 84 und einem Auslauf 86 und einem dazwischenliegenden Filtermedium zusammengesetzt ist, das aus einer Vielzahl an einzelnen Diamanten 94, vorzugsweise aus ganzen Diamanten mit einem Karat und einem Durchmesser von 3 Millimetern oder weniger besteht und darüber hinaus über ein paar Droht- oder Maschensiebe 88 verfügt, die angrenzend an den Einlauf- und Auslassöffnungen 84 und 86 befestigt sind, um die einzelnen Diamanten im Gehäuses 82 zurückzuhalten und das Destillat weiter zu filtern, der Apparat verfügt weiterhin über Düsen 92, die sich am Einlauf 84 und Auslauf 86 des Gehäuses 82 befinden, diese Düsen werden verwendet, um die einzelnen Diamanten 94 zurückzuhalten und um diese daran zu hindern, sich ein den Ecken des Apparats abzusetzen, der Apparat verfügt darüber hinaus über einen Apparat 96 für die Endfiltration, der aus einem Gehäuse 98 besteht, in dem sich Diamantstaub oder Diamantsplitter 104 sowie ein Paar Maschensiebe 102 mit einer Maschenweite von 5 Mikrometern oder weniger befinden, der besagte Filterapparat wird verwendet, um alle Verunreinigungen oder Diamantpartikel, die in dem Filterapparat in das Destillat gelangt sein können, zu entfernen.

5. Der Filterapparat gemäß Anspruch 4, wobei die Diamanten 94 im Behälter 82 in Schwebe gehalten werden, wenn der Apparat in Betrieb ist.

## Revendications

1. Procédé de production d'un spiritueux distillé vieilli et filtré comprenant
les étapes suivantes :
fermentation d'une quantité de seigle, par laquelle de l'alcool est produit en tant que sous-produit ;
distillation de l'alcool pour supprimer des impuretés, augmenter la concentration et produire un distillat d'alcool ;
dilution du distillat d'alcool avec de l'eau déminéralisée pour produire un distillat à une teneur en alcool d'environ 65% en volume ;
fourniture d'un premier et d'un deuxième baril en chêne ou doublé de chêne, le premier baril étant sensiblement plus grand que le deuxième ;
vieillissement du distillat d'alcool dans le premier baril pour une première période de temps ;
transfert du distillat d'alcool du premier baril vers le deuxième baril et vieillissement du distillat d'alcool pour une deuxième période de temps, où la première période étant plus longue que la deuxième période de temps ;
filtrage du distillat d'alcool vieilli au moyen d'un filtre à colonne en polypropylène avec un maillage d'un diamètre entre 5 et ,2 microns afin de supprimer l'une quelconque des impuretés résultant du vieillissement ;
distillation fractionnée du distillat d'alcool vieilli, par laquelle une fraction intermédiaire est séparée des fractions initiales et finales et retenue pour un traitement ultérieur ;
dilution du distillat d'alcool retenu avec de l'eau déminéralisée pour produire à une teneur en alcool de 40% en volume ;
fourniture d'un appareil de filtration comprenant un récipient en verre contenant une pluralité de diamants en vrac, dans lequel récipient comprend des buses afin de retenir les diamants, les diamants sont utilisés comme moyen de filtrage ;
fourniture du distillat d'alcool retenu dans le récipient en verre dudit appareil, où les diamants sont mis en suspension et le distillat d'alcool retenu est filtré par les diamants, afin d'en améliorer le goût et la texture;
filtrage du distillat d'alcool retenu afin de supprimer l'une quelconque impuretés résultant de la filtration au moyen des diamants.

2. Procédé selon la revendication 1, dans lequel le vieillissement du distillat d'alcool dure au moins deux années.

3. Procédé selon la revendication 1 ou 2, dans lequel le vieillissement est effectué en barils doublés de chêne.

4. Appareil de filtration pour filtration des distillats d'alcool, dans laquelle appareil comprend un récipient de verre 82 avec un orifice d'entrée 84 et avec un orifice de sortie 86 et un moyen de filtrage entre ceux-ci, qui comprend une pluralité de diamants en vrac 94, de préférence des diamants entiers d'un carat ou moins et d'un diamètre de 3 millimètres ou moins, l'appareil comprend en outre une paire d'écrans 88 de fil ou de maille qui sont fixés à proximité orifices d'entrée et de sortie 84 et 86 afin de prévenir la fuite des diamants en vrac du récipient 82 et pour filtrer en outre le distillat, l'appareil comprend en outre des buses 92 situées dans les orifices d'entrée 84 et de sortie 86 du boîtier 82, lesdites buses sont utilisées pour retenir les diamants en vrac 94 et pour prévenir leur accumulation dans les coins de l'appareil, l'appareil comprend en outre un dernier appareil de filtration 96 à diamants qui comprend un boîtier 98 qui comprend à l'intérieur une quantité de poussières ou de copeaux de diamant 104 et une paire d'écrans de maille 102 avec des mailles de 5 microns ou moins, ledit appareil de filtration finale est utilisé pour supprimer l'une quelconque des impuretés ou particule de diamant pouvant pénétrer le distillat dans l'appareil de filtration.

5. Appareil de filtration selon la revendication 4, dans lequel les diamants 94 sont maintenus en suspension dans le récipient 82 lorsque ledit appareil est utilisé.
